(19) Europäisches Patentamt / European Patent Office / Office européen des brevets

(11) **EP 3 074 644 B1**

(12) **EUROPÄISCHE PATENTSCHRIFT**

(45) Veröffentlichungstag und Bekanntmachung des Hinweises auf die Patenterteilung:
**12.07.2017  Patentblatt 2017/28**

(21) Anmeldenummer: **14802616.4**

(22) Anmeldetag: **18.11.2014**

(51) Int Cl.:
***F16B 13/06*** *(2006.01)*

(86) Internationale Anmeldenummer:
**PCT/EP2014/074883**

(87) Internationale Veröffentlichungsnummer:
**WO 2015/075022 (28.05.2015 Gazette 2015/21)**

(54) **SPREIZANKER MIT ANISOTROPEM REIBUNGSKOEFFIZIENTEN**

EXPANSION ANCHOR WITH ANISOTROPIC FRICTION COEFFICIENTS

CHEVILLE À EXPANSION DOTÉE DE COEFFICIENTS DE FROTTEMENT ANISOTROPES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2013  EP 13194195**

(43) Veröffentlichungstag der Anmeldung:
**05.10.2016  Patentblatt 2016/40**

(73) Patentinhaber: **Hilti Aktiengesellschaft**
**9494 Schaan (LI)**

(72) Erfinder:
• **GSTACH, Peter**
  **CH-9494 Schaan (LI)**
• **WINKLER, Bernhard**
  **A-6800 Feldkirch (AT)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A1- 0 514 342      EP-A2- 0 567 203**
**US-A1- 2008 050 195**

**Beschreibung**

Die Erfindung betrifft einen Spreizanker gemäss dem Oberbegriff des Anspruchs 1. Ein solcher Spreizanker ist ausgestattet mit einem Bolzen, zumindest einem Expansionselement und zumindest einer am Bolzen angeordneten Schrägfläche, welche das Expansionselement radial nach aussen drängt, wenn der Bolzen in einer Auszugsrichtung, insbesondere axial, relativ zum Expansionselement versetzt wird.

Spreizanker sind beispielsweise aus der EP 0514342 A1 bekannt. Sie werden in ein Bohrloch in einem Substrat, z. B. in einer Wand oder einer Decke eines Bauteils, eingesetzt. Durch Einziehen eines am Bolzen angeordneten Spreizkonus mit einer Schrägfläche in ein als Spreizhülse ausgebildetes Expansionselement wird dieses Expansionselement radial aufgeweitet und nach aussen gedrängt und dadurch der Spreizanker im Substrat verankert. Gemäss EP 0514342 A1 ist dabei an der Kontaktfläche zwischen Bolzen und Expansionselement eine reibungsmindernde Beschichtung vorgesehen.

Die US 2008050195A beschreibt einen Spreizanker, bei dem die Oberflächenrauigkeit der Spreizhülse zum hinteren Ankerende hin ansteigt.

Aus der EP 0567203 A2 ist ein Walzverfahren bekannt, bei dem durch Texturierung der Walzenoberfläche ein anisotroper Reibungsbeiwert erzeugt wird.

Aufgabe der Erfindung ist es, einen besonders leistungsfähigen und vielseitig einsetzbaren, und zugleich auch besonders zuverlässigen und einfach herstellbaren Spreizanker anzugeben.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass der Reibungskoeffizient der Reibung zwischen Expansionselement und Schrägfläche richtungsabhängig ist.

Ein Grundgedanke der Erfindung kann darin gesehen werden, zwischen dem Expansionselement und der Schrägfläche eine anisotrope, also richtungsabhängige Reibung vorzusehen. Je nachdem, in welche Richtung sich die Schrägfläche relativ zum Expansionselement bewegt, sind somit bei ansonsten identischen Bedingungen unterschiedliche Reibungskräfte zwischen Schrägfläche und Expansionselement gegeben.

Die Erfindung hat erkannt, dass bei der Auslegung von Spreizankern die Situation auftreten kann, bei der eine Änderung der Ausgestaltung des Ankers zwar an einer Stelle zu einer Verbesserung des Ankerverhaltens führt, dies jedoch mit Einbussen an anderer Stelle einhergeht. So kann es beispielsweise einerseits wünschenswert sein, zwischen Schrägfläche und Expansionselement einen hohen Reibungskoeffizienten vorzusehen, um ein Durchziehen der Schrägfläche durch das Expansionselement, das heisst insbesondere durch die Spreizhülse, und somit ein vorzeitiges Versagen des Ankers bei übermässigen statischen Zuglasten zu vermeiden. Andererseits kann ein hoher Reibungskoeffizient die Wahrscheinlichkeit dafür erhöhen, dass der Anker zu Beginn des Setzvorgangs nicht greift und in unerwünschter Weise aus dem Bohrloch herausgezogen wird, ohne aufzuspreizen. Darüber hinaus kann ein zu hoher Reibungskoeffizient nachteilig im Hinblick auf dynamische Risse in gerissenem Beton sein. Ist nämlich der Reibungskoeffizient zwischen Schrägfläche und Spreizhülse gross, so wird die Schrägfläche zwar tiefer in die Spreizhülse eingezogen, wenn sich der Riss, in dem sich der Anker befindet, aufweitet. Allerdings kehrt sich dieser Vorgang bei grossem Reibungskoeffizient nicht um, wenn sich der Riss im Anschluss wieder schliesst, und die Schrägfläche verbleibt tief in der Spreizhülse, was zu einer Schädigung des umgebenden Betons führen kann. Für gerissenen Beton kann daher ein niedriger Reibungskoeffizient vorteilhaft sein, um ein "Pumpen", also ein Vor- und Zurückgleiten der Schrägfläche in der Spreizhülse bei Rissöffnung und anschliessender Rissschliessung, zu gewährleisten.

Bei der Auslegung eines herkömmlichen Ankers musste man sich daher entscheiden, ob man im Hinblick auf gute Eigenschaften in gerissenem Beton mit beweglichen Rissen einen niedrigen Reibungskoeffizienten zwischen Expansionselement und Schrägfläche wählt, was jedoch mit einer geringeren statischen Auszugslast verbunden ist, oder ob ein hoher Reibungskoeffizient gewählt wird, welcher zwar zu hohen statischen Auszugslasten führt, jedoch zu schlechteren Eigenschaften in gerissenem Beton.

Hier setzt die Erfindung an und sieht einen richtungsabhängigen Reibungskoeffizienten zwischen Expansionselement und Schrägfläche vor. Somit wird durch die Erfindung ein zusätzlicher Freiheitsgrad zur Verfügung gestellt, mit dem der Spreizvorgang des Expansionselements kontrolliert werden kann. Insbesondere kann hierdurch der zuvor beschriebene Widerspruch zwischen guten Eigenschaften in gerissenem Beton und hoher statischer Auszugslast aufgelöst werden. Somit kann in besonders einfacher Weise ein besonders zuverlässiger und vielseitig einsetzbarer Anker zur Verfügung gestellt werden.

Der richtungsabhängige Reibungskoeffizient kann beispielsweise durch eine asymmetrische Strukturierung der Schrägfläche und/oder der korrespondierenden Innenoberfläche des Expansionselements realisiert werden. Die Strukturierung kann beispielsweise durch Laser- oder Elektronenstrahlbehandlung erzeugt werden. Im Zusammenhang mit der Erfindung kann unter dem Reibungskoeffizienten insbesondere der Haftreibungskoeffizient verstanden werden. Das Expansionselement und/oder der Bolzen bestehen bevorzugt aus einem Metallmaterial, welches zur gezielten Beeinflussung der Reibung auch beschichtet sein kann.

Das Expansionselement ist erfindungsgemäss längs des Bolzens verschiebbar am Bolzen angeordnet, insbesondere befestigt. Soweit hier von "radial" und "axial" die Rede ist, soll sich dies insbesondere auf die Längsachse des Bolzens und/oder Spreizankers beziehen, die insbesondere die Symmetrie- und/oder Mittelachse des Bolzens beziehungsweise des Spreizankers sein kann. Der Spreizanker kann insbesondere ein kraftkontrolliert spreizender Spreizanker sein.

Erfindungsgemäss wird das Expansionselement von der Schrägfläche radial nach aussen gedrängt und dabei gegen die Bohrlochwand im Substrat gepresst, wenn der Bolzen mitsamt der Schrägfläche in Auszugsrichtung des Bolzens relativ zum Expansionselement axial versetzt wird. Hierdurch wird der Spreizanker im Bohrloch verankert. Vorzugsweise verläuft die Auszugsrichtung parallel zur Längsachse des Bolzens und/oder zeigt aus dem Bohrloch heraus. Vorzugsweise nimmt an der Schrägfläche der Abstand von der Längsachse des Bolzens entgegen der Auszugsrichtung zu.

Insbesondere kann vorgesehen sein, dass der Reibungskoeffizient für den Fall, bei dem die Schrägfläche in Auszugsrichtung relativ zum Expansionselement bewegt wird, grösser ist als der Reibungskoeffizient für den Fall, bei dem die Schrägfläche entgegen der Auszugsrichtung relativ zum Expansionselement bewegt wird, also in Richtung Bohrlochgrund bewegt wird. Somit ist die Reibungskraft bei ansonsten gleichen Bedingungen dann grösser, wenn das Expansionselement entlang der Schrägfläche radial nach aussen gedrängt wird, als dann, wenn es entlang der Schrägfläche radial nach innen zurückgleitet. Durch diese Ausgestaltung können wie bereits oben erläutert sowohl gute Eigenschaften in gerissenem Beton als auch hohe statische Auszugslasten erzielt werden.

Besonders vorteilhaft ist es, dass der Reibungskoeffizient für den Fall, bei dem die Schrägfläche in Auszugsrichtung relativ zum Expansionselement bewegt wird, 1.3 bis 1.7 mal, insbesondere 1.5 mal grösser ist als der Reibungskoeffizient für den Fall, bei dem die Schrägfläche entgegen der Auszugsrichtung relativ zum Expansionselement bewegt wird. Hierdurch kann bei üblichen Abmessungen ein besonders zuverlässiger Anker erhalten werden, der sowohl gute Eigenschaften in gerissenem Beton mit dynamischen Rissen als auch hohe statische Auszugslasten in ungerissenem Beton aufweist.

Eine bevorzugte Ausgestaltung der Erfindung liegt darin, dass der Reibungskoeffizient für den Fall, bei dem die Schrägfläche entgegen der Auszugsrichtung des Bolzens relativ zum Expansionselement bewegt wird, kleiner ist als der Tangens des Winkels, welchen die Schrägfläche mit der Längsachse des Bolzens einschliesst:

$$\mu < \tan(\alpha).$$

Bei dieser Ausgestaltung kann die Kraftkomponente parallel zur Schrägfläche, die sich bei einem zum Bolzen hin gerichteten Druck auf das Expansionselement einstellt, grösser sein als die Haftreibung zwischen Expansionselement und Schrägfläche. Hierdurch wiederum kann besonders zuverlässig sichergestellt werden, dass ein Zurückgleiten der Schrägfläche am Expansionselement während des Schliessens eines zuvor geöffneten Risses im umgebenden Beton nicht durch die Reibung gehemmt wird. Die Schrägfläche wird daher wieder tiefer in das Bohrloch gedrückt, so dass eine Schädigung des Betons im Spreizbereich des Bolzens vermieden wird.

Nach der Erfindung kann der Bolzen eine Lastaufnahmeeinrichtung aufweisen, die insbesondere als Aussengewinde oder als Innengewinde ausgebildet sein kann. Die Lastaufnahmeeinrichtung dient zur Einleitung von Zugkräften, die in Auszugsrichtung gerichtet sind, in den Anker. Zweckmässigerweise ist die Schrägfläche in einem ersten Endbereich des Bolzens und die Lastaufnahmeeinrichtung in einem gegenüberliegenden zweiten Endbereich des Bolzens angeordnet. Insbesondere kann der Richtungsvektor der Auszugsrichtung von der Schrägfläche zur Lastaufnahmeeinrichtung gerichtet sein. An der Schrägfläche nimmt der Abstand zur Längsachse des Bolzens mit zunehmendem Abstand von der Lastaufnahmeeinrichtung zu.

Besonders bevorzugt ist es, dass das Expansionselement eine Spreizhülse ist, die den Bolzen zumindest bereichsweise umgibt, und/oder dass am Bolzen ein Spreizkonus angeordnet ist, wobei die Schrägfläche durch den Spreizkonus gebildet wird. Hierdurch wird eine besonders gleichmässige Krafteinleitung in Umfangsrichtung erzielt. Vorzugsweise beträgt die Winkelausdehnung der Spreizhülse um die Längsachse des Bolzens zumindest 270°, insbesondere zumindest 315° oder 340°. Gemäss dieser Ausführungsform kann in besonders einfacher Weise sichergestellt werden, dass der Bolzen nicht unmittelbar an der Bohrlochwand reibt, sondern zumindest grösstenteils nur mittelbar über die Spreizhülse. Dies wiederum kann in besonders einfacher Weise gewährleisten, dass die erfindungsgemäss richtungsabhängige Reibung nicht von unmittelbaren Reibungskomponenten zwischen Bolzen und Bohrlochwand maskiert wird. Der Spreizkonus ist erfindungsgemäss zum Aufspreizen der Spreizhülse, das heisst zum radialen Aufweiten der Spreizhülse, vorgesehen. Es können ein Expansionselement oder auch mehrere Expansionselemente vorgesehen sein, und eine entsprechende Anzahl von Schrägflächen. Der Spreizkonus kann eine mathematisch streng konische Oberfläche haben, muss dies aber nicht.

Bei einem sogenannten Bolzenanker kann der Spreizkonus axial fest am Bolzen angeordnet sein. In diesem Fall wird der Spreizkonus mit der Schrägfläche beim Setzen des Spreizankers durch eine gemeinsame axiale Bewegung des Bolzens und des Spreizkonus relativ zur Spreizhülse in die Spreizhülse eingezogen. Der Spreizkonus ist dabei vorzugsweise einstückig mit dem Bolzen ausgebildet. Alternativ kann bei einem sogenannten Hülsenanker der Spreizkonus ein vom Bolzen separates Teil sein und vorzugsweise über korrespondierende Gewinde mit dem Bolzen verbunden sein. Das Einziehen des Spreizkonus in die Spreizhülse kann dann vorzugsweise zumindest teilweise durch Rotation des Bolzens relativ zum Spreizkonus bewirkt werden, welche von einem Spindeltrieb, der von den korrespondierenden Gewinden gebildet wird, in eine Axialbewegung des Spreizkonus relativ zum Bolzen umgesetzt wird.

Insbesondere kann am Bolzen ein Anschlag, beispielsweise eine Ringschulter, ausgebildet sein, der eine Verschiebung des Expansionselements von der Schrägfläche hinweg begrenzt. Dies ist insbesondere bei einem Bolzenanker vorteilhaft. Das Expansionselement, das auch mehrteilig ausgeführt sein kann, kann aber auch bis zum Bohrlochmund reichen, insbesondere bei einem Hülsenanker.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figur 1:  eine teilweise längsgeschnittene Ansicht eines in einem Betonsubstrat gesetzten erfindungsgemässen Spreizankers gemäss einer ersten Ausführungsform;

Figur 2:  eine abgewickelte Ansicht der Aussenseite des Bolzens des Ankers aus Figur 1 am Spreizkonus;

Figur 3:  eine abgewickelte Ansicht der Innenseite des als Spreizhülse ausgebildeten Expansionselements des Ankers aus Figur 1; und

Figur 4:  eine teilweise längsgeschnittene Ansicht eines in einem Betonsubstrat gesetzten erfindungsgemässen Spreizankers gemäss einer zweiten Ausführungsform.

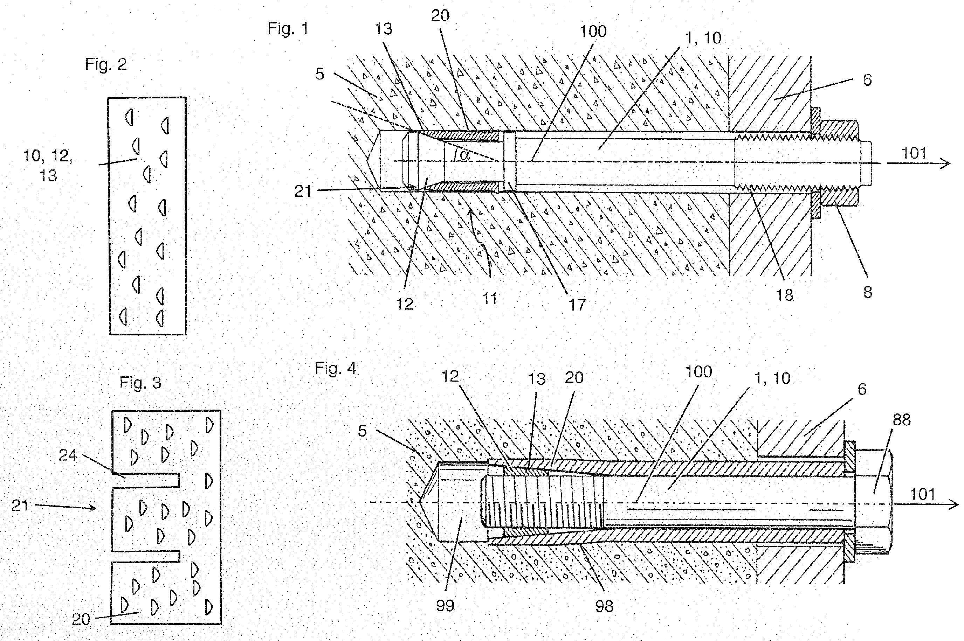

Die Figuren 1 bis 3 zeigen ein Ausführungsbeispiel eines Spreizankers 1 gemäss der Erfindung. Wie insbesondere Figur 1 zeigt, weist der Spreizanker 1 einen Bolzen 10 und ein als Spreizhülse ausgebildetes Expansionselement 20 auf, wobei die Spreizhülse den Bolzen 10 umgibt. Der Bolzen 10 weist einen Halsbereich 11 mit konstantem Querschnitt und im Anschluss an den Halsbereich 11 im vorderen Endbereich des Bolzens 10 einen Spreizkonus 12 für die Spreizhülse 20 auf, an welchem die Oberfläche als Schrägfläche 13 ausgebildet ist. Die Schrägfläche 13 ist hier rotationssymmetrisch ausgeführt. Aufgrund der Schrägfläche 13 weitert sich der Bolzen 10 am Spreizkonus 12 ausgehend vom Halsbereich 11 zu seinem vorderen Ende hin auf. Auf der dem Spreizkonus 12 abgewandten Seite des Halsbereichs 11 weist der Bolzen 10 einen beispielsweise als Ringschulter ausgebildeten Anschlag 17 für die Spreizhülse 20 auf. An seinem dem Spreizkonus 12 entgegengesetzten hinteren Endbereich ist der Bolzen 10 mit einem Aussengewinde 18 für eine Mutter 8 versehen.

Wie insbesondere in Figur 3 erkennbar ist, weist die Spreizhülse 20 Spreizschlitze 24 auf, die von der vorderen Stirnseite 21 der Spreizhülse 20 ausgehen. Diese Spreizschlitze 24 erleichtern das radiale Aufweiten der Spreizhülse 20 durch den Spreizkonus 12 des Bolzens 10. Die Spreizhülse 20 kann durch Aufrollen einer Blechplatine gefertigt werden.

Beim Setzen des Spreizankers 1 wird der Bolzen 10 mit dem Spreizkonus 12 voran entgegen der Auszugsrichtung 101 parallel zur Längsachse 100 des Bolzens 10 in ein Bohrloch im Substrat 5 aus Figur 1 geschoben. Aufgrund des Anschlags 17 wird dabei auch das als Spreizhülse ausgebildete Expansionselement 20 in das Bohrloch eingebracht. Sodann wird der Bolzen 10, beispielsweise durch Anziehen der Mutter 8, wieder ein Stück weit in der parallel zur Längsachse 100 verlaufenden Auszugsrichtung 101 aus dem Bohrloch herausgezogen. Aufgrund seiner Reibung mit der Bohrlochwand bleibt das als Spreizhülse ausgebildete Expansionselement 20 dabei zurück und es kommt zu einer Verschiebung des Bolzens 10 relativ zum Expansionselement 20. Bei dieser Verschiebung dringt die Schrägfläche 13 des Spreizkonus 12 des Bolzens 10 immer tiefer so in das Expansionselement 20 ein, dass das Expansionselement 20 von der Schrägfläche 13 radial aufgeweitet und mit der Wand des Bohrlochs verpresst wird. Durch diesen Mechanismus wird der Spreizanker 1 im Substrat 5 fixiert. Der gesetzte Zustand des Spreizankers 1, in dem er im Substrat 5 fixiert ist, ist in Figur 1 gezeigt. Mittels der Mutter 8 kann ein Anbauteil 6 am Substrat 5 festgelegt werden.

Nach der Erfindung ist der Haftreibungskoeffizient $\mu$ zwischen dem Expansionselement 20 und der Schrägfläche 13 am Spreizkonus 12 des Bolzens 10 richtungsabhängig. Insbesondere ist der Haftreibungskoeffizient $\mu$ bei einer Bewegung des Bolzens 10 relativ zum Expansionselement 20 in Auszugsrichtung 101 grösser als bei einer Bewegung entgegen der Auszugsrichtung 101. Aufgrund des vergleichsweise hohen Haftreibungskoeffizienten $\mu$ bei einer Bewegung des Bolzens 10 in Auszugsrichtung 101 werden hohe Auszugslasten bei statischer Belastung, insbesondere in ungerissenem Beton erreicht. Aufgrund des vergleichsweise niedrigen Haftreibungskoeffizienten $\mu$ bei einer Bewegung des Bolzens 10 entgegen der Auszugsrichtung 101 kann gewährleistet werden, dass der Bolzen 10 relativ zum Expansionselement 20 wieder in seine Ausgangsposition zurückkehrt, wenn sich ein Betonriss am Anker 1 geringfügig öffnet und dann wieder schliesst. Dies kann insbesondere dann gewährleistet werden, wenn der Haftreibungskoeffizient $\mu$, der sich bei einer Bewegung des Bolzens 10 entgegen der Auszugsrichtung 101 einstellt, kleiner ist als der Tangens des Winkels $\alpha$, welchen die

Schrägfläche 13 mit der Längsachse 100 des Bolzens einschliesst:

$$\mu < \tan (\alpha).$$

Wie in den Figuren 2 und 3 angedeutet ist, kann das Expansionselement 20 auf seiner dem Bolzen 10 zugewandten Innenoberfläche und/oder der Bolzen 10 auf seiner dem Expansionselement 20 zugewandten Mantelfläche eine Mikrostrukturierung, insbesondere eine asymmetrische Mikrostrukturierung aufweisen, welche die Richtungsabhängigkeit des Haftreibungskoeffizienten $\mu$ zwischen dem Expansionselement 20 und der Schrägfläche 13 bewirkt.

Beim Ausführungsbeispiel der Figur 1 ist der Spreizanker 1 als sogenannter Bolzenanker ausgeführt. Ein weiteres Ausführungsbeispiel, bei dem der Spreizanker 1 als sogenannter Hülsenanker ausgebildet ist, ist in Figur 4 gezeigt. Im Gegensatz zum Bolzenanker aus Figur 1, bei dem der Spreizkonus 12 mit der Schrägfläche 13 axial fest am Bolzen 10 vorgesehen ist und insbesondere einstückig mit dem Bolzen 10 ausgebildet ist, ist der Spreizkonus 12 mit der Schrägfläche 13 beim Hülsenanker der Figur 4 ein vom Bolzen 10 separates Teil. Er weist ein Innengewinde auf, welches mit einem Aussengewinde am Bolzen 10 korrespondiert. Darüber hinaus reicht beim Hülsenanker der Figur 4 das als Spreizhülse ausgebildete Expansionselement 20, welches auch mehrteilig sein kann, bis zum Bohrlochmund, und am rückwärtigen Ende des Bolzens 10 ist ein verbreiterter Kopf 88 drehfest am Bolzen 10 angeordnet.

Zum Setzen des Hülsenankers der Figur 4 wird der Bolzen 10 über den Kopf 88 um die Längsachse 100 in Drehung versetzt. Die korrespondierenden Gewinde wandeln diese Drehbewegung des Bolzens 10 in eine Axialbewegung des Spreizkonus 12 relativ zum Bolzen 10 und damit relativ zur Spreizhülse 20 um, was zum Einziehen des Spreizkonus 12 mit der Schrägfläche 13 in die Spreizhülse 20 führt.

Auch beim Hülsenanker der Figur 4 ist ein erfindungsgemäss richtungsabhängiger Reibungskoeffizient zwischen dem als Spreizhülse ausgebildeten Expansionselement 20 und der Schrägfläche 13 gegeben, wobei die Haftreibungskoeffizienten $\mu$ wie oben im Zusammenhang mit dem ersten Ausführungsbeispiel diskutiert gewählt sein können.

## Patentansprüche

1. Spreizanker (1) mit

    - einem Bolzen (10),
    - zumindest einem Expansionselement (20), und
    - zumindest einer am Bolzen (10) angeordneten Schrägfläche (13), welche das Expansionselement (20) radial nach aussen drängt, wenn der Bolzen (10) in einer Auszugsrichtung (101) relativ zum Expansionselement (20) versetzt wird,

    **dadurch gekennzeichnet,**
    **dass** der Reibungskoeffizient der Reibung zwischen Expansionselement (20) und Schrägfläche (13) richtungsabhängig ist.

2. Spreizanker nach (1) Anspruch 1,
    **dadurch gekennzeichnet,**
    **dass** der Reibungskoeffizient für den Fall, bei die Schrägfläche (13) in Auszugsrichtung (101) relativ zum Expansionselement (20) bewegt wird, grösser ist als der Reibungskoeffizient für den Fall, bei dem die Schrägfläche (13) entgegen der Auszugsrichtung (101) relativ zum Expansionselement (20) bewegt wird.

3. Spreizanker (1) nach einem der vorstehenden Ansprüche,
    **dadurch gekennzeichnet,**
    **dass** der Reibungskoeffizient für den Fall, bei dem die Schrägfläche (13) in Auszugsrichtung (101) relativ zum Expansionselement (20) bewegt wird, 1.3 bis 1.7 mal, insbesondere 1.5 mal grösser ist als der Reibungskoeffizient für den Fall, bei dem die Schrägfläche (13) entgegen der Auszugsrichtung (101) relativ zum Expansionselement (20) bewegt wird.

4. Spreizanker (1) nach einem der vorstehenden Ansprüche,
    **dadurch gekennzeichnet,**
    **dass** der Reibungskoeffizient für den Fall, bei dem die Schrägfläche (13) entgegen der Auszugsrichtung (101) relativ zum Expansionselement (20) bewegt wird, kleiner ist als der Tangens des Winkels ($\alpha$), welchen die Schrägfläche (13) mit der Längsachse (100) des Bolzens (10) einschliesst.

5. Spreizanker (1) nach einem der vorstehenden Ansprüche,
    **dadurch gekennzeichnet,**
    **dass** das Expansionselement (20) eine Spreizhülse ist, die den Bolzen (10) zumindest bereichsweise umgibt, und
    **dass** am Bolzen (10) ein Spreizkonus (12) angeordnet ist, wobei die Schrägfläche (13) durch den Spreizkonus (12) gebildet wird.

## Claims

1. Expansion anchor (1) with

    - a bolt (10),
    - at least one expansion element (20), and

- at least one bevel (13) arranged on the bolt (10), which pushes the expansion element (20) radially outwards, if the bolt (10) is moved in an extraction direction (101) in relation to the expansion element (20),

**characterised in that**
the friction coefficient of the friction between the expansion element (20) and the bevel (13) is dependent on direction.

2. Expansion anchor according to (1) claim 1, **characterised in that** in the case of the bevel (13) being moved in the extraction direction (101) in relation to the expansion element (20) the friction coefficient is greater than the friction coefficient in the case of the bevel (13) being moved against the extraction direction (101) in relation to the expansion element (20).

3. Expansion anchor (1) according to one of the previous claims, **characterised in that** in the case of the bevel (13) being moved in the extraction direction (101) in relation to the expansion element (20) the friction coefficient is 1.3 to 1.7 times, particularly 1.5 times, greater than the friction coefficient in the case of the bevel (13) being moved against the extraction direction (101) in relation to the expansion element (20).

4. Expansion anchor (1) according to one of the previous claims, **characterised in that** in the case of the bevel (13) being moved against the extraction direction (101) in relation to the expansion element (20) the friction coefficient is smaller than the tangent of the angle (a), which the bevel (13) encloses with the longitudinal axis (100) of the bolt (10).

5. Expansion anchor (1) according to one of the above claims, **characterised in that** the expansion element (20) is an expansion sleeve, which surrounds the bolt (10) at least in areas, and an expansion cone (12) is arranged on the bolt (10), in which the bevel (13) is formed by the expansion cone (12).

**Revendications**

1. Ancrage expansible (1) comportant :

  - un boulon (10),
  - au moins un élément d'expansion (20), et
  - au moins une surface oblique (13) agencée sur le boulon (10), qui pousse l'élément d'expansion (20) radialement vers l'extérieur lorsque le boulon (10) est déplacé dans une direction d'extraction (101) par rapport à l'élément d'expansion (20),

**caractérisé en ce que**
le coefficient de frottement du frottement entre l'élément d'expansion (20) et la surface oblique (13) est dépendant de la direction.

2. Ancrage expansible (1) selon la revendication 1, **caractérisé en ce que** le coefficient de frottement dans le cas où la surface oblique (13) est déplacée dans la direction d'extraction (101) par rapport à l'élément d'expansion (20) est plus grand que le coefficient de frottement dans le cas où la surface oblique (13) est déplacée à l'opposé de la direction d'extraction (101) par rapport à l'élément d'expansion (20).

3. Ancrage expansible (1) selon l'une des revendications précédentes, **caractérisé en ce que** le coefficient de frottement dans le cas où la surface oblique (13) est déplacée dans la direction d'extraction (101) par rapport à l'élément d'expansion (20) est de 1,3 à 1,7 fois, en particulier 1,5 fois, plus grand que le coefficient de frottement dans le cas où la surface oblique (13) est déplacée à l'opposé de la direction d'extraction (101) par rapport à l'élément d'expansion (20).

4. Ancrage expansible (1) selon l'une des revendications précédentes, **caractérisé en ce que** le coefficient de frottement dans le cas où la surface oblique (13) est déplacée à l'opposé de la direction d'extraction (101) par rapport à l'élément d'expansion (20) est plus petit que la tangente de l'angle ($\alpha$) formé par la surface oblique (13) avec l'axe longitudinal (100) du boulon (10).

5. Ancrage expansible (1) selon l'une des revendications précédentes, **caractérisé en ce que** l'élément d'expansion (20) est une douille d'expansion qui entoure le boulon (10) au moins dans certaines zones, et sur le boulon (10) est agencé un cône d'expansion (12), la surface oblique (13) étant formée par le cône d'expansion (12).

Fig. 2

10, 12, 13

Fig. 3

24

21

20

Fig. 1

13    20    100    1, 10

5                                      6

α

21

12    11    17              18    8

101

Fig. 4

12  13  20        100    1, 10

5                                6    88

101

99              98

EP 3 074 644 B1

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0514342 A1
- US 2008050195 A
- EP 0567203 A2